(19) Europäisches Patentamt
European Patent Office
Office européen des brevets

(11) EP 4 796 302 A1

(12) EUROPEAN PATENT APPLICATION
published in accordance with Art. 153(4) EPC

(43) Date of publication:
**26.08.2026 Bulletin 2026/35**

(21) Application number: **23956200.2**

(22) Date of filing: **20.10.2023**

(51) International Patent Classification (IPC):
***B29C 70/16*** (2006.01) ***B29C 70/50*** (2006.01)
***B29C 70/52*** (2006.01) ***B29B 15/12*** (2006.01)
***B29K 105/08*** (2006.01) ***B29K 101/12*** (2006.01)

(52) Cooperative Patent Classification (CPC):
**B29B 15/12; B29C 70/16; B29C 70/50; B29C 70/52;** B29K 2101/12; B29K 2105/08

(86) International application number:
**PCT/KR2023/016420**

(87) International publication number:
**WO 2025/084478 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **LX Hausys, Ltd.**
**Seoul 04637 (KR)**

(72) Inventors:
- **PARK, Sang Ho**
  **Seoul 07796 (KR)**
- **PARK, Jongsung**
  **Seoul 07796 (KR)**
- **MOON, Young E**
  **Seoul 07796 (KR)**
- **CHOI, Han Na**
  **Seoul 07796 (KR)**
- **LEE, Kyungrak**
  **Seoul 07796 (KR)**

(74) Representative: **Zacco Sweden AB**
**P.O. Box 5581**
**Löjtnantsgatan 21**
**114 85 Stockholm (SE)**

# (54) CONTINUOUS FIBER-REINFORCED COMPOSITE MATERIAL

(57) Provided is continuous fiber-reinforced composite material. The continuous fiber-reinforced composite material according to an embodiment of the present disclosure is highly rigid and comprises thermoplastic resin and continuous fibers, the average diameter of the continuous fibers being 20-24μm and rigidity being 45GPa or greater.

FIG. 2

Processed by Luminess, 75001 PARIS (FR)

## Description

[Technical Field]

The present disclosure relates to a continuous fiber-reinforced composite material having high tensile strength and rigidity.

[Background Art]

Recently, interest in energy conservation has greatly increased, and correspondingly, improving fuel efficiency and reducing weight in transportation means, such as vehicles and aircraft, are one of important factors.

Most of conventional components constituting vehicles and aircraft are made of metal as a main material to secure high strength and rigidity. When the components are made of metal, the processing cost is high and the weight is heavy, which is disadvantageous for improving fuel efficiency or reducing weight. Therefore, in recent years, various components are being manufactured using a fiber-reinforced composite material instead of metal so as to achieve the purpose of reducing weight.

However, a conventional fiber-reinforced composite material has been limited in imparting high strength and rigidity.

[Disclosure]

[Technical Problem]

An object of the present disclosure is to provide a continuous fiber-reinforced composite material capable of exhibiting high rigidity along with a predetermined level of tensile strength.

Another object of the present disclosure is to provide a continuous fiber-reinforced composite material in the form of a thick unidirectional prepreg, which makes it possible to increase the production speed of products using the continuous fiber-reinforced composite material, to reduce a laminating process during sheet combining, and to improve the surface quality of the products.

Objects of the present disclosure are not limited to the aforementioned objects, and other objects and advantages of the present disclosure that are not described above can be understood by the following description and will be more clearly understood by the embodiments of the present disclosure. In addition, it will be readily apparent that the objects and advantages of the present disclosure can be realized by means set forth in the claims and combinations thereof.

[Technical Solution]

According to the present disclosure, there may be provided a continuous fiber-reinforced composite material including a thermoplastic resin and continuous fibers, the average diameter of the continuous fibers being 20-24μm and rigidity being 45GPa or greater.

[Advantageous Effects]

A continuous fiber-reinforced composite material according to the present disclosure can exhibit high tensile strength and tensile rigidity.

Further, a continuous fiber-reinforced composite material according to the present disclosure can increase the production speed of products using the continuous fiber-reinforced composite material, reduce a laminating process during sheet combining, and improve the surface quality of the products.

In addition to the above-described effects, specific effects of the present disclosure will be described in conjunction with the detailed description for carrying out the invention set forth below.

[Description of Drawings]

FIG. 1 schematically illustrates the process of manufacturing a continuous fiber-reinforced composite material according to one embodiment of the present disclosure.

FIG. 2 shows a continuous fiber-reinforced composite material according to one embodiment of the present

disclosure.

FIG. 3 schematically illustrates a relationship among roving (yarn), bundles, and fibers.

FIG. 4 exemplarily and schematically shows fibers for explaining the characteristics of continuous fiber-reinforced composite materials of Comparative Example (2400 tex) and Example (4800 tex).

[Best Mode for Carrying Out the Invention]

The aforementioned objects, features, and advantages will be described in detail with reference to the accompanying drawings, whereby those skilled in the art to which the present disclosure pertains will be able to readily carry out the technical spirit of the present disclosure. In describing the present disclosure, if it is determined that a detailed description of known technology related to the present disclosure may unnecessarily obscure the gist of the present disclosure, the detailed description thereof will be omitted. Hereinafter, preferred embodiments according to the present disclosure will be described in detail with reference to the accompanying drawings. In the drawings, the same reference numerals are used to designate the same or similar components.

Hereinafter, when any structure is disposed on the "upper (or lower)" portion of a component or "on (or under)" the component, this may mean not only that the structure is disposed in contact with the upper (or lower) surface of the component, but also that another structure may be interposed between the component and the structure disposed on (or under) the component.

Hereinafter, continuous fiber-reinforced composite materials according to some embodiments of the present disclosure will be described.

One embodiment of the present disclosure provides a continuous fiber-reinforced composite material that includes thermoplastic resin and continuous fibers, the average diameter of the continuous fibers being 20-24μm and rigidity being 45GPa or greater.

Most of conventional components constituting vehicles and aircraft are made of metal as a main material to secure high strength and rigidity. When the components are made of metal, the processing cost is high and the weight is heavy, which is disadvantageous for improving fuel efficiency or reducing weight. Therefore, in recent years, various components are being manufactured using a fiber-reinforced composite material instead of metal so as to achieve the purpose of reducing weight. However, a conventional fiber-reinforced composite material has been limited in simultaneously imparting high strength and rigidity.

A fiber-reinforced composite material is a material that combines two or more materials to exhibit a function unattainable by a single material alone, and is composed of fibers serving as a reinforcement and a polymer matrix. The strength of the fiber-reinforced composite material tends to increase as the number of reinforcing fibers increases. On the other hand, the rigidity is proportional to the fiber content, and is improved only by increasing the fiber content. Thus, it is practically difficult to manufacture a fiber-reinforced composite material that has a predetermined level of strength while possessing significantly improved rigidity. For example, as the number of reinforcing fibers increases in the fiber-reinforced composite material, the interfacial contact area (interfacial contact degree) between the fibers and the resin increases, and the strength increases, so that it may not be difficult to increase the strength. On the other hand, as the number of fibers gradually increases, porosity decreases and the impregnation property of the resin deteriorates. Accordingly, there is a limitation on the number of fibers that may be impregnated into the fiber-reinforced composite material, and thus fibers with a high content may not be impregnated, resulting in a problem that high rigidity cannot be secured.

The continuous fiber-reinforced composite material includes thermoplastic resin and continuous fibers and is highly rigid, the average diameter of the continuous fibers being 20-24μm and rigidity being 45GPa or greater.

Specifically, the continuous fiber-reinforced composite material may be a unidirectional prepreg (hereinafter referred to as "UD sheet"), in which fibers, for example, glass fibers are impregnated as continuous fibers in one direction into the thermoplastic resin serving as the matrix to be continuously manufactured.

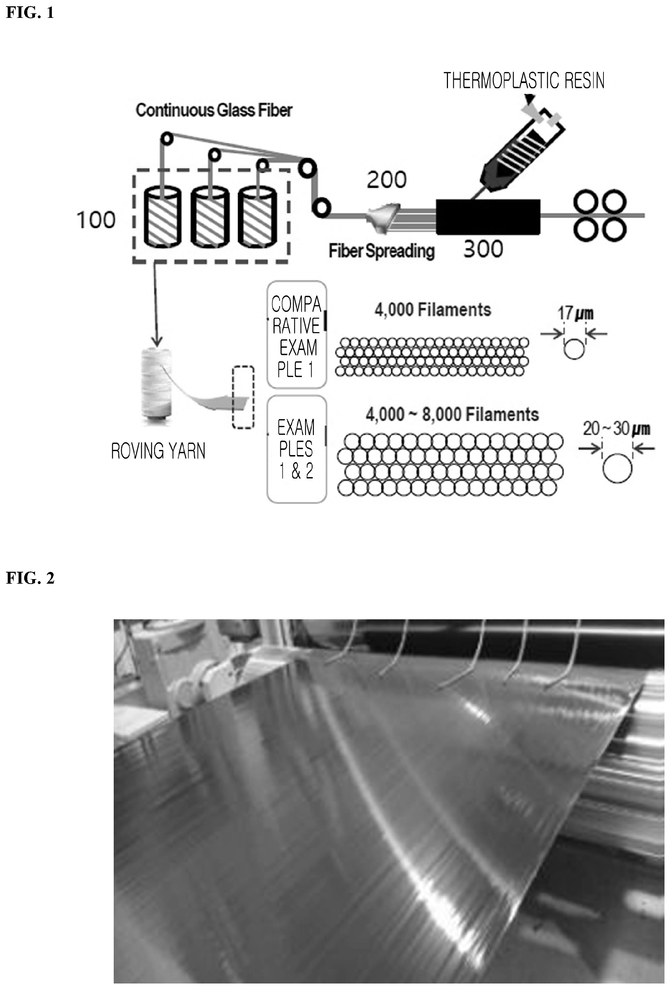

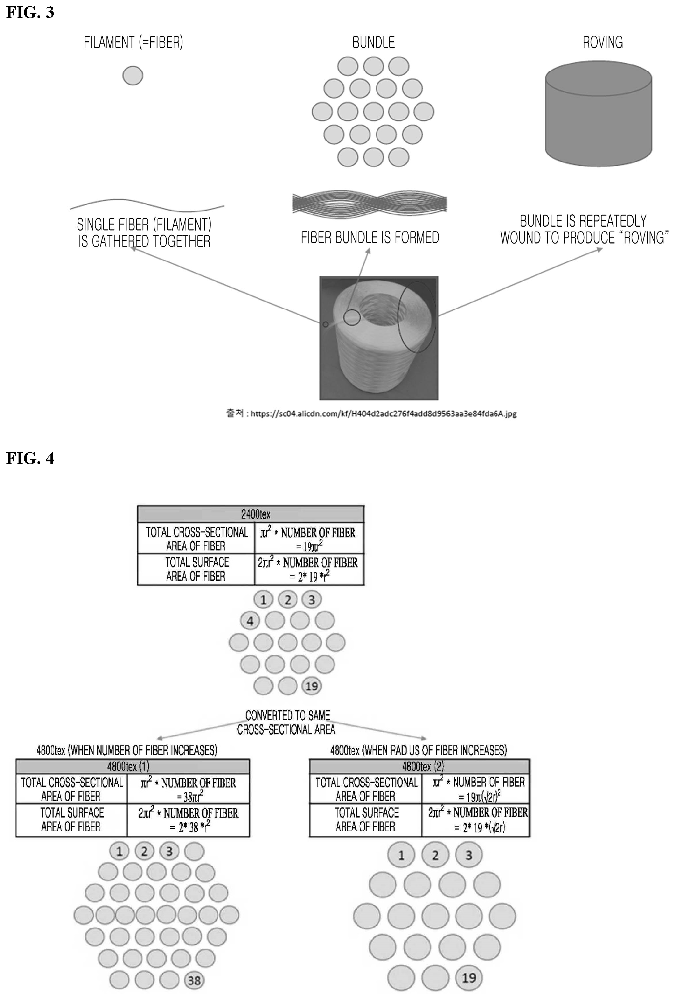

FIG. 1 schematically illustrates the process of manufacturing a continuous fiber-reinforced composite material according to one embodiment of the present disclosure. Fibers drawn out from a plurality of bobbins 100 including roving yarn are passed through a spreading unit 200 to be spread to a predetermined width, the spread fibers are put into an impregnation die 300, the thermoplastic resin is impregnated into the fibers and then cured or solidified, thereby enabling the continuous production of the unidirectional prepreg. FIG. 2 is a photograph showing the unidirectional prepreg, which is the continuous fiber-reinforced composite material manufactured according to one embodiment of the present disclosure. In this case, the roving yarn (roving) refers, as shown in FIG. 3, to one "bundle" wound repeatedly, and the bundle means a group of fibers (filament).

The continuous fiber-reinforced composite material may include, as the matrix, the thermoplastic resin, and the thermoplastic resin may include one selected from a group consisting of polyester, polypropylene (PP), polyethylene (PE), acryl butadiene styrene (ABS), polycarbonate (PC), nylon, polyvinyl chloride (PVC), polystyrene (PS), polyurethane (PU), polymethyl methacrylate (PMMA), polylactic acid (PLA), Teflon (polytetrafluoroethylene), polyamide (PA), and combina-

tions thereof. For example, the thermoplastic resin may include polypropylene resin, thereby easily achieving a lightweight effect. For example, the thermoplastic resin may include at least one polypropylene-based copolymer resin selected from a group consisting of a propylene homopolymer, a propylene-ethylene copolymer resin, a propylene-butene copolymer resin, an ethylene-propylene-butene copolymer resin, and combinations thereof.

The thermoplastic resin forming the matrix of the continuous fiber-reinforced composite material may be impregnated with a thermoplastic resin having a melt index (MI) of 20 g/10 min to 100 g/10 min at 230 °C, in accordance with ASTM D1238.

If the melt index of the thermoplastic resin when impregnated into the fibers is less than the above range, there is a concern that the impregnation property may be deteriorated due to reduced flowability of the thermoplastic resin, and if the melt index exceeds the above range, there is a problem in the film-forming characteristics of the thermoplastic resin. The thermoplastic resin may include a single thermoplastic resin having a melt index within the above range, or may be formed to have a melt index within the above range by mixing two or more thermoplastic resins having different melt indices.

The thermoplastic resin may be introduced into the impregnation die by a conventional manufacturing method. For example, the thermoplastic resin may be introduced by a one-way discharge such as top discharge or bottom discharge, or by a simultaneous top-and-bottom discharge method. For example, the thermoplastic resin may be introduced by the top discharge method, thereby enhancing the impregnation property while introducing a small amount of resin into a high content of continuous fibers.

The continuous fiber-reinforced composite material includes continuous fibers as the reinforcing fibers. The term "continuous fiber" refers to fibers that are structurally uncut and extended in a continuous manner, and means fibers that exist in an unbroken, continuous form within the composite material, depending on the overall size of the continuous fiber-reinforced composite material, for example, the unidirectional prepreg. By using the fibers in the form of the continuous fibers, orientation can be formed and maintained more effectively compared to the case of using discontinuous fibers cut to a predetermined length, such as long fibers or short fibers, and it is possible to more easily control an orientation angle with respect to a reinforcing direction required for an article so as to improve impact resistance.

The continuous fiber may be one selected from a group consisting of carbon fibers, glass fibers, aramid fibers, and combinations thereof. For example, the continuous fiber-reinforced composite material may include glass fibers as the continuous fibers.

The continuous fiber may be formed from a continuous fiber bundle of 3,000 tex to 7,000 tex. For example, it may be formed from a continuous fiber bundle of 4,800 tex to 7,000 tex. The tex value refers to the mass (g) per unit length of the fiber. The tex value of the fiber may be influenced by the diameter of the fiber, i.e., the filament, and the number of fibers (filaments) (ea/bundle). The smaller the diameter of the fiber, the lower the tex value, and the larger the diameter of the fiber, the higher the tex value. In addition, the greater the number of fibers, the higher the tex value may be.

The average diameter of the continuous fibers is 20 $\mu$m to 24 $\mu$m. The continuous fiber-reinforced composite material may include continuous fibers having the average diameter within the above range, thereby appropriately adjusting the interfacial contact area between the continuous fibers and the thermoplastic resin and increasing the permeability of the resin. Thus, high rigidity can be exhibited together with excellent strength. For example, the continuous fiber-reinforced composite material reinforced with a high content of continuous fibers, e.g., 75 wt% or more, may be manufactured. For example, when the average diameter of the continuous fibers is less than the above range, a large number of fibers should be included to increase the fiber content, which may lead to reduced resin impregnability and deterioration of the physical properties of the composite material, such as strength and rigidity. Further, when the average diameter of the continuous fibers exceeds the above range, the impregnability of the continuous fibers becomes favorable, but there may be a problem in that the interfacial area between the continuous fibers and the matrix of the composite material becomes excessively low, resulting in a significant reduction in strength. The continuous fibers can more easily impart strength and high rigidity by simultaneously having the tex within the above range and the average diameter within the above range.

The continuous fibers may be formed from a bundle containing 2,000 ea/bundle to 6,000 ea/bundle. For example, they may be formed from a bundle containing 3,000 ea/bundle to 6,000 ea/bundle. By including the continuous fibers, strength and high rigidity can be more easily imparted.

The term "strength" refers to the amount of stress that a material can withstand before it breaks, and the term "rigidity" refers to the amount of stress that a material can withstand before it deforms. If an object does not easily change its shape or volume even when force is applied thereto, it can be said to have high rigidity and low flexibility.

The continuous fiber-reinforced composite material may contain less than 1 wt% of a sizing agent. For example, it may contain less than 0.4 wt% of a sizing agent. The sizing agent refers collectively to substances used as a coating agent to size continuous fibers, i.e., continuous filaments, and the sizing agent causes the continuous fiber filaments to form a sized continuous fiber bundle. The sized continuous fibers improve the handleability of the continuous fibers. On the other hand, if the sizing is easily released, it may cause twisting of the fibers during the process, and may also act as a factor causing friction between the fibers and components such as pins and creels.

And, the openability of the continuous fiber bundle may be affected by the sizing agent. In order to enhance the

impregnability of the resin into the continuous fibers, the sizing agent should be removed. If the sizing agent remains, the spreading property (openability) of the continuous fiber bundle may be deteriorated during the impregnation process. At the initial stage of unwinding the continuous fiber bundle, it is preferable that a sufficient amount of sizing agent be present for smooth operation, while toward an inner portion of the continuous fiber bundle, it is preferable that the sizing agent be absent.

The continuous fibers included in the continuous fiber-reinforced composite material may be formed by the continuous fiber bundle containing a certain amount of sizing agent, and, for example, may be formed by the continuous fiber bundle containing the sizing agent in the outermost portion of the continuous fiber bundle.

The continuous fiber-reinforced composite material may include continuous fibers having a diameter and/or number within the above range, thereby enabling the manufacture of the continuous fiber-reinforced composite material as a unidirectional prepreg of increased thickness.

For example, as shown in Table 1, it can be seen that Examples having 4800 tex have a thickness about twice that of Comparative Example 1 having 2400 tex. For example, the continuous fiber-reinforced composite material may have a thickness of 0.15 mm to 1 mm. For example, the lower limit of the thickness of the continuous fiber-reinforced composite material may be 0.15 mm, 0.27 mm, or 0.3 mm, and the upper limit of the thickness of the continuous fiber-reinforced composite material may be 0.3 mm, 0.54 mm, or 0.6 mm. For example, the continuous fiber-reinforced composite material may have a thickness of 0.27 mm to 0.54 mm.

Thus, even when manufactured at the same line speed, a production yield can be improved. For example, the production yield can be increased by two times or more. In addition, when the unidirectional prepregs are laminated by combining them, the lamination process can be reduced due to the increased thickness of the unidirectional prepreg (i.e., cycle/time is shortened). Thus, the surface quality of a molded product manufactured by combining the unidirectional prepregs can be improved. For example, it is possible to prevent cracks from occurring between prepregs in the process of combining the plurality of prepregs.

The continuous fiber-reinforced composite material including the continuous fibers can improve resin impregnability due to its high permeability. For example, as shown in Table 1, compared with Comparative Example 1 having 2400 tex, Examples having 4800 tex exhibit wider spacing between fibers and improved resin flowability when viewed from the same unit area.

In the continuous fiber-reinforced composite material, the permeability K of the thermoplastic resin can be measured according to the Carman-Kozeny equation, as expressed in Equation (1) below.

[Equation 1]

$$K=d^2\varepsilon^3/16k(1-\varepsilon)^2$$

Here, d represents the average diameter of the continuous fibers, $\varepsilon$ represents the porosity, and k represents a constant.

As shown in Equation (1), the larger the diameter of the continuous fibers, the greater the permeability. Thus, a high content of fibers can be sufficiently impregnated with a low content of resin, and significantly higher strength and rigidity can be achieved.

Even when including the same number of fibers, the continuous fiber-reinforced composite material can exhibit significantly higher strength and rigidity by including a diameter within the above range.

For example, FIG. 4 illustratively and schematically shows the fibers to explain the characteristics of the continuous fiber-reinforced composite materials of Comparative Example (2400 tex) and Example (4800 tex). The Example has twice the tex of the Comparative Example. The 4800 tex may be classified into 4800 tex (1), in which the number of fibers is doubled, and 4800 tex (2), in which the fiber radius is increased by $\sqrt{2}$ times. In this case, it can be seen that 4800 tex (2), in which the fiber diameter is increased, has a surface area of about 0.7 times that of 4800 tex (1), resulting in a reduction in the fiber surface area that comes into contact with the resin. The fiber-reinforced composite material may control the number of fibers, the degree of contact (A) with the resin, permeability, and the like by adjusting the type of fiber (e.g., tex) and the fiber diameter, thereby exhibiting high rigidity while ensuring a certain level of strength.

The continuous fiber-reinforced composite material may contain the continuous fibers in an amount of more than 70 wt% and not more than 90 wt%. For example, the continuous fibers may be included in a high content of 75 wt% to 90 wt% or 80 wt% to 90 wt%. Thus, high strength and rigidity can be exhibited.

The continuous fiber-reinforced composite material can exhibit excellent impregnability by increasing the permeability of the resin through the adjustment of the spacing between the fibers including the continuous fibers and the interfacial contact area between the fibers and the resin, even though it contains a high content of continuous fibers within the above range.

Thus, the continuous fiber-reinforced composite material may have a void ratio of less than 5%. For example, it

may have a void ratio of less than 3% or of less than 0-1%.

Voids include "impregnation voids" generated during the impregnation step and "lamination voids" generated during the sheet combining process. The voids refer to "impregnation voids," which are voids occurring between fibers within a single unidirectional prepreg (UD sheet).

The continuous fiber-reinforced composite material, despite containing the continuous fibers at a high content and impregnating the continuous fibers with the thermoplastic resin at a low content, may have the void ratio (porosity) within the above range, thereby exhibiting high strength and rigidity.

The void ratio may be measured according to ASTM D2734 by the following Equation (3).

[Equation 3]

$$\text{void ratio(porosity, \%)} = \left[1 - \frac{\text{density(g/cm}^3)}{\text{Ash density(wt\%)}}\right] \times 100$$

In Equation (3), the density in the numerator (g/cm$^3$) refers to a value measured using a water densitometer in accordance with ASTM D792, which specifies the density (g/cm$^3$) of the continuous fiber-reinforced composite material.

Further, the Ash density (wt%) in the denominator refers to a value in accordance with ASTM D5630, which is calculated by applying the fiber density (e.g., glass fiber density = 2.58 g/cm$^3$) and matrix density (e.g., polypropylene density = 0.905 g/cm$^3$) based on the fiber weight fraction obtained by heating the continuous fiber-reinforced composite material at 600°C, performing an ash test, and measuring a weight difference before and after 3 hours.

To be more specific, the Ash density is calculated according to the following Equation (5), using the fiber volume fraction as defined in the following Equation (4).

[Equation 4]

$$\text{fiber volume fraction} = \frac{\left(\frac{\text{fiber weight fraction}}{\text{fiber density}}\right)}{\left(\frac{\text{fiber weight fraction}}{\text{fiber density}}\right) + \left(\frac{\text{matrix weight fraction}}{\text{matrix density}}\right)}$$

*fiber weight fraction = sample weight after Ash/sample weight before Ash
* matrix weight fraction = 1-fiber weight fraction
*matrix density(=GF 0% density)=0.905 g/cm$^3$ (based on polypropylene)
*fiber density(=glass fiber 100% density)=2.580 g/cm$^3$
*matrix volume fraction(volume fraction) = 1-fiber volume fraction(volume fraction)

[Equation 5] Ash density = (fiber volume fraction X fiber density + matrix volume fraction X matrix density) [Equation 5]

Depending on the degree to which fibers are impregnated with resin, the void ratio may vary and affect the physical properties. The degree of impregnation may be influenced by the width of the spread continuous fibers, the line speed of the manufactured continuous fiber-reinforced composite material, and the melt index of the resin. For example, the continuous fiber-reinforced composite material may be spread to a width of about 1000 mm or more and 1500 mm or less.

And, the continuous fiber-reinforced composite material including the continuous fibers may be manufactured at a line speed of 8 to 20 m/min.

In this case, the resin having the melt index (MI, 230 °C) of 20 g/10 min to 100 g/10 min may be introduced into the continuous fibers to improve the impregnation degree. For example, when the line speed is high relative to the melt index of the resin, the impregnability of the resin may deteriorate, and when the fiber spacing becomes excessively large due to spreading, there may be a problem in that non-impregnated resin regions occur. Thus, the void ratio may increase, resulting in deterioration of the physical properties.

The continuous fiber-reinforced composite material may exhibit high strength and rigidity. Specifically, the continuous fiber-reinforced composite material may have the rigidity of 45 GPa or more. Alternatively, it may have the rigidity of 50 GPa or more, and the upper limit of the rigidity may be 60 GPa.

Further, the continuous fiber-reinforced composite material may exhibit strength of 800 MPa or more, for example, 950 MPa or more, or 980 MPa or more, and the upper limit of the strength may be 1500 MPa.

(Example)

Example 1

A total of 130 continuous glass fiber bundles (4800 tex, 5,800 ea/bundle) composed of glass fibers (filaments) having an average diameter of 20 μm were spread by 10 mm per bundle to make a width of 1,300 mm.

Further, polypropylene having the melt index (MI) of 20 g/10 min to 100 g/10 min (at 230 °C) was discharged from the upper part of the impregnation die onto the spread continuous glass fibers to impregnate them, and a continuous fiber-reinforced composite material, which is a unidirectional prepreg, was manufactured at the line speed of 8 m/min to 20 m/min. In this case, the continuous fiber-reinforced composite material was impregnated such that the glass fibers accounted for 80 wt%.

Example 2

A continuous fiber-reinforced composite material, which is a unidirectional prepreg, was manufactured in the same manner as in Example 1, except that continuous glass fiber bundles (4800 tex, 4,000 ea/bundle) composed of glass fibers (filaments) having the average diameter of 24 μm were used. In this case, the continuous fiber-reinforced composite material was impregnated such that the glass fibers accounted for 80 wt%.

Comparative Example 1

A continuous fiber-reinforced composite material, which is a unidirectional prepreg, was manufactured in the same manner as in Example 1, except that continuous glass fiber bundles (2400 tex, 4,000 ea/bundle) composed of glass fibers (filaments) having the average diameter of 17 μm were used.

In this case, the continuous fiber-reinforced composite material was impregnated such that the glass fibers accounted for 74 wt%.

Comparative Example 2 - Comparative Example 6

A continuous fiber-reinforced composite material, which is a unidirectional prepreg, was manufactured in the same manner as in Example 1, except that, as shown in Table 1 below, the type of fiber to be impregnated, the average diameter, and the content were changed to produce fiber-reinforced composite materials of Comparative Examples 2 to 6. In the case where 2400 tex fibers having the average diameter of 17 μm were impregnated at 80 wt%, it was confirmed that the resin impregnability was significantly reduced and that a fiber-reinforced composite material was not formed.

**Evaluation**

Experimental Example 1: Tensile Strength (MPa) and Tensile rigidity (GPa)

The tensile strength and tensile rigidity of the continuous fiber-reinforced composite materials, which are prepregs, of the above Examples and Comparative Examples were measured under the conditions of 2 mm/min in accordance with ASTM D3039, and the results are shown in Table 1 below.

[Table 1]

| Classification | Fiber type | Average fiber diameter (μm) | Fiber content in fiber-reinforced composite material (wt%) | Tensile strength (MPa) | Tensile rigidity (GPa) |
|---|---|---|---|---|---|
| Example 1 | 4800 tex | 20μm | 80 | 983 | 50 |
| Example 2 | 4800 tex | 24μm | 80 | 960 | 46 |
| Comparative Example 1 | 2400 tex | 17μm | 74 | 900 | 36 |
| Comparative Example 2 | 2400 tex | 17μm | 70 | 870 | 36 |
| Comparative Example 3 | 4800 tex | 24μm | 70 | 741 | 38 |
| Comparative Example 4 | 2400 tex | 17μm | 60 | 800 | 30 |
| Comparative Example 5 | 4800 tex | 24μm | 60 | 618 | 31 |

(continued)

| Classification | Fiber type | Average fiber diameter (μm) | Fiber content in fiber-reinforced composite material (wt%) | Tensile strength (MPa) | Tensile rigidity (GPa) |
|---|---|---|---|---|---|
| Comparative Example 6 | 2400 tex | 17μm | 80 | - | - |

Referring to Table 1, the 2400 tex fibers with a small diameter of 17 μm contain a greater number of fibers per unit area compared to the 4800 tex fibers. Accordingly, it can be seen that when the same fiber content is included, the 2400 tex fibers with the small diameter, which include a larger number of fibers, exhibit high strength. However, it can be seen that the rigidity is not improved.

When the content of the 2400 tex fibers with a small diameter was increased to increase rigidity, it was confirmed that a fiber-reinforced composite material was produced only up to 74 wt%, and when 80 wt% of fibers were impregnated, it was confirmed that the porosity was decreased and the resin impregnability was significantly reduced, so that a fiber-reinforced composite material was not formed.

Experimental Example 2: Permeability (K) and Interfacial Contact Degree (A)

In the above Examples and Comparative Examples, the permeability K of the polypropylene was measured according to the following Equation (1), which is the Carman-Kozeny equation. At this time, in order to determine the relative permeability of the Examples with reference to the permeability of Comparative Example 1, the total cross-sectional area of Comparative Example 1 was measured as a unit area. The results are shown in Table 2 below.

[Equation 1]

$$K=d^2\varepsilon^3/16k(1-\varepsilon)^2$$

Here, d is the average diameter of the glass fiber, ε is the porosity, and k is a constant.

In the above Examples and Comparative Examples, in order to determine the degree of interfacial contact A between the glass fibers and polypropylene, measurements were taken according to Equation (2) below using the circumference of the glass fiber (= 2πr). At this time, in order to determine the relative degree of interfacial contact of the above Examples based on the degree of interfacial contact between the glass fiber and polypropylene of Comparative Example 1, the total cross-sectional area of Comparative Example 1 was taken as the unit area, and the degree of interfacial contact between the glass fibers and polypropylene was measured. The results are shown in Table 2 below.

[Equation 2]

$$A=2\pi r \times \text{number (ea) of glass fibers (filaments) contained in unit area}$$

[Table 2]

| Classification | | example 1 | example 2 | example 1 |
|---|---|---|---|---|
| glass fiber tex | | 4800tex | 4800tex | 2400tex |
| one bundle of fiber | schematic sectional view of continuous fiber-reinforced composite material (a, 2a: thickness) | 2a | 2a | a |
| | average diameter of glass fiber (filament) (μm) | 20 | 24 | 17 |
| | number of glass fiber (filament) (ea /bundle) | 5,800 | 4,000 | 4.000 |

(continued)

| Classification | | example 1 | example 2 | example 1 |
|---|---|---|---|---|
| unit area | schematic sectional view of unit area | | | Resin Flow Pass |
| | number (ea) of glass fiber (filament) per unit area (ea) | 2,900 | 2,000 | 4,000 |
| | permeability | +38% | +99% | Ref. |
| | interfacial contact area of glass fiber (A) | -15% | -29% | Ref. |
| tensile strength (Mpa) | | 983 | 960 | 900 |
| tensile rigidity (GPa) | | 50 | 46 | 36 |

As shown in Table 2, it can be seen that the Examples have a thickness about twice that of Comparative Example 1. Thus, the production speed of molded articles using the continuous fiber-reinforced composite material can be increased, the lamination process during sheet combining can be reduced, and the surface quality of the product can be improved.

Further, compared with Comparative Example 1, it can be seen that in the Examples, the spacing between the fibers becomes wider and the flowability of the resin is significantly improved when viewed in the same unit area. For example, Example 2 is a case where the number of fibers is the same as in Comparative Example 1 but fibers with a larger average diameter are included. At this time, when examining the fibers included in the unit area, it can be seen that the spacing between the fibers in Example 2 is wider and the flowability of the resin is improved.

Furthermore, in terms of permeability K, it can also be seen that the Examples exhibit significantly improved permeability compared with the Comparative Examples. For example, when Comparative Example 1 shows 100% permeability, Example 2 exhibited 199% permeability. In addition, it can be confirmed that the Examples show a decrease in the interfacial contact degree A between the glass fibers and the resin. For example, when Comparative Example 1 shows the contact degree A of 100%, Example 2 exhibited the contact degree A of 71%. In addition, it can be confirmed that the continuous fiber-reinforced composite material, which is the unidirectional prepreg of the Examples, simultaneously has high tensile strength and significantly improved tensile rigidity.

Although the present disclosure has been described with reference to exemplary drawings, it is obvious that the present disclosure is not limited by the embodiments and drawings disclosed herein, and that various modifications can be made by those skilled in the art within the scope of the technical idea of the present disclosure. In addition, even if the operational effects according to the configuration of the present disclosure have not been explicitly described while explaining the embodiments of the present disclosure, it is natural that the effects predictable by such configuration should also be recognized.

[DETAILED DESCRIPTION OF MAIN ELEMENTS]

100: bobbin
200: spreading unit
300: impregnation die

## Claims

1. A continuous fiber-reinforced composite material comprising:
a thermoplastic resin and continuous fiber, an average diameter of the continuous fiber being 20-24μm and rigidity being 45GPa or greater.

2. The continuous fiber-reinforced composite material of claim 1, wherein a content of the continuous fiber is more than

70 wt% and not more than 90 wt%.

3. The continuous fiber-reinforced composite material of claim 1, wherein the continuous fiber-reinforced composite material is a unidirectional prepreg.

4. The continuous fiber-reinforced composite material of claim 1, wherein the continuous fiber-reinforced composite material has a void ratio of less than 5%.

5. The continuous fiber-reinforced composite material of claim 1, wherein the continuous fiber-reinforced composite material has a sizing agent of less than 1.0 wt%.

6. The continuous fiber-reinforced composite material of claim 1, wherein the thermoplastic resin comprises one selected from a group consisting of polyester, polypropylene (PP), polyethylene (PE), acryl butadiene styrene (ABS), polycarbonate (PC), nylon, polyvinyl chloride (PVC), polystyrene (PS), polyurethane (PU), polymethyl methacrylate (PMMA), polylactic acid (PLA), Teflon (polytetrafluoroethylene), polyamide (PA), and combinations thereof.

7. The continuous fiber-reinforced composite material of claim 1, wherein the continuous fiber-reinforced composite material is impregnated with a thermoplastic resin having a melt index (MI) of 20 g/10 min to 100 g/10 min at 230 °C, in accordance with ASTM D1238.

8. The continuous fiber-reinforced composite material of claim 1, wherein the continuous fiber is one selected from a group consisting of carbon fiber, glass fiber, aramid fiber, and combinations thereof.

9. The continuous fiber-reinforced composite material of claim 1, wherein the continuous fiber is formed from a bundle containing 2,000 ea/bundle to 6,000 ea/bundle.

10. The continuous fiber-reinforced composite material of claim 1, wherein the continuous fiber is formed from a bundle of 3,000 tex to 7,000 tex.

FIG. 1

THERMOPLASTIC RESIN
Continuous Glass Fiber
200
100
Fiber Spreading
300
COMPARATIVE EXAMPLE 1
4,000 Filaments
17 µm
ROVING YARN
EXAMPLES 1 & 2
4,000 ~ 8,000 Filaments
20 ~ 30 µm

FIG. 2

**FIG. 3**

FILAMENT (=FIBER)
BUNDLE
ROVING
SINGLE FIBER (FILAMENT) IS GATHERED TOGETHER
FIBER BUNDLE IS FORMED
BUNDLE IS REPEATEDLY WOUND TO PRODUCE "ROVING"
출처 : https://sc04.alicdn.com/kf/H404d2adc276f4add8d9563aa3e84fda6A.jpg

**FIG. 4**

| 2400tex | |
|---|---|
| TOTAL CROSS-SECTIONAL AREA OF FIBER | $\pi r^2$ * NUMBER OF FIBER = $19\pi r^2$ |
| TOTAL SURFACE AREA OF FIBER | $2\pi r^2$ * NUMBER OF FIBER = 2* 19 *$r^2$ |

1
2
3
4
19
CONVERTED TO SAME CROSS-SECTIONAL AREA
4800tex (WHEN NUMBER OF FIBER INCREASES)
4800tex (WHEN RADIUS OF FIBER INCREASES)

| 4800tex (1) | |
|---|---|
| TOTAL CROSS-SECTIONAL AREA OF FIBER | $\pi r^2$ * NUMBER OF FIBER = $38\pi r^2$ |
| TOTAL SURFACE AREA OF FIBER | $2\pi r^2$ * NUMBER OF FIBER = 2* 38 *$r^2$ |

| 4800tex (2) | |
|---|---|
| TOTAL CROSS-SECTIONAL AREA OF FIBER | $\pi r^2$ * NUMBER OF FIBER = $19\pi(\sqrt{2}r)^2$ |
| TOTAL SURFACE AREA OF FIBER | $2\pi r^2$ * NUMBER OF FIBER = 2* 19 *$(\sqrt{2}r)$ |

1
2
3
38
1
2
3
19

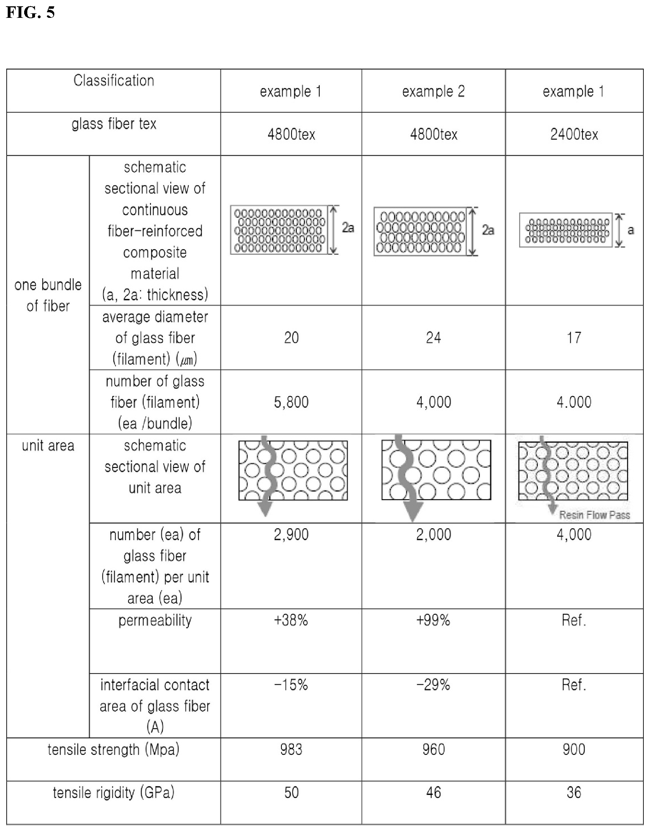

**FIG. 5**

| Classification | | example 1 | example 2 | example 1 |
|---|---|---|---|---|
| glass fiber tex | | 4800tex | 4800tex | 2400tex |
| one bundle of fiber | schematic sectional view of continuous fiber-reinforced composite material (a, 2a: thickness) | 2a | 2a | a |
| | average diameter of glass fiber (filament) (µm) | 20 | 24 | 17 |
| | number of glass fiber (filament) (ea /bundle) | 5,800 | 4,000 | 4.000 |
| unit area | schematic sectional view of unit area | | | Resin Flow Pass |
| | number (ea) of glass fiber (filament) per unit area (ea) | 2,900 | 2,000 | 4,000 |
| | permeability | +38% | +99% | Ref. |
| | interfacial contact area of glass fiber (A) | -15% | -29% | Ref. |
| tensile strength (Mpa) | | 983 | 960 | 900 |
| tensile rigidity (GPa) | | 50 | 46 | 36 |

## INTERNATIONAL SEARCH REPORT

International application No.
**PCT/KR2023/016420**

**A. CLASSIFICATION OF SUBJECT MATTER**

**B29C 70/16**(2006.01)i; **B29C 70/50**(2006.01)i; **B29C 70/52**(2006.01)i; **B29B 15/12**(2006.01)i; B29K 105/08(2006.01)n; B29K 101/12(2006.01)n

According to International Patent Classification (IPC) or to both national classification and IPC

**B. FIELDS SEARCHED**

Minimum documentation searched (classification system followed by classification symbols)

B29C 70/16(2006.01); B32B 27/12(2006.01); B32B 27/32(2006.01); C08J 5/00(2006.01); C08J 5/04(2006.01); C08J 5/06(2006.01); C08J 5/08(2006.01); C08K 7/02(2006.01); D01D 5/08(2006.01); D01F 1/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열가소성 수지(thermoplastic resin), 연속 섬유(continuous fiber), 보강(reinforce), 복합재(composite)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1814057 B1 (GS CALTEX CORPORATION) 03 January 2018 (2018-01-03) See claims 7-10; and paragraphs [0044]-[0054]. | 1-10 |
| Y | KR 10-2016-0085384 A (LG HAUSYS, LTD.) 18 July 2016 (2016-07-18) See paragraphs [0027]-[0028]. | 1-10 |
| Y | KR 10-2015-0123367 A (LG HAUSYS, LTD.) 04 November 2015 (2015-11-04) See claims 1-2 and 5; and paragraphs [0020], [0052] and [0104]-[0105]. | 3-4,9 |
| A | KR 10-2012-0076325 A (CHEIL INDUSTRIES INC.) 09 July 2012 (2012-07-09) See entire document. | 1-10 |
| A | KR 10-2015-0123370 A (LG HAUSYS, LTD.) 04 November 2015 (2015-11-04) See entire document. | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 July 2024** | **17 July 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/016420**

| Patent document cited in search report | Publication date (day/month/year) | Patent family member(s) | Publication date (day/month/year) |
|---|---|---|---|
| KR 10-1814057 B1 | 03 January 2018 | CN 108026296 A | 11 May 2018 |
| | | CN 108026296 B | 09 February 2021 |
| | | JP 2018-529851 A | 11 October 2018 |
| | | JP 6643467 B2 | 12 February 2020 |
| | | KR 10-2017-0037762 A | 05 April 2017 |
| | | US 2018-0273709 A1 | 27 September 2018 |
| | | WO 2017-052315 A1 | 30 March 2017 |
| KR 10-2016-0085384 A | 18 July 2016 | KR 10-1952621 B1 | 28 February 2019 |
| KR 10-2015-0123367 A | 04 November 2015 | KR 10-1771286 B1 | 25 August 2017 |
| KR 10-2012-0076325 A | 09 July 2012 | US 2012-0190785 A1 | 26 July 2012 |
| | | US 8476355 B2 | 02 July 2013 |
| KR 10-2015-0123370 A | 04 November 2015 | None | |

Form PCT/ISA/210 (patent family annex) (July 2022)